# EUROPEAN PATENT SPECIFICATION

(11) **EP 4 604 805 B1**
(45) Date of publication and mention of the grant of the patent: **15.04.2026**
(21) Application number: 23789981.0
(22) Date of filing: 13.10.2023
(51) Int. Cl.: A46B 15/00, A61C 17/22, A46B 9/04, B26B 21/40

(54) **LOCALIZATION METHOD FOR A PERSONAL CARE DEVICE**
LOKALISIERUNGSVERFAHREN FÜR EINE KÖRPERPFLEGEVORRICHTUNG
PROCÉDÉ DE LOCALISATION POUR UN DISPOSITIF DE SOINS PERSONNELS

(30) Priority: 20.10.2022 EP 22202830
(43) Date of publication of application: 27.08.2025
(73) Proprietor: Koninklijke Philips N.V., 5656 AG Eindhoven (NL)
(72) Inventor: SAEED, Aaqib, 5656 AG Eindhoven (NL); VLUTTERS, Ruud, 5656 AG Eindhoven (NL); YUAN, Zhaorui, 5656 AG Eindhoven (NL); DE GROOT, Koen Theo Johan, 5656 AG Eindhoven (NL)
(74) Representative: Philips Intellectual Property & Standards
(86) International application number: PCT/EP2023/078438
(87) International publication number: WO 2024/083659

(56) References cited:
- WO-A1-2021/262955
- US-A1- 2018 250 108
- US-A1- 2020 069 042
- US-A1- 2020 202 520

## Description

### FIELD OF THE INVENTION

The present invention relates to a method for real-time localization of a portion of a personal care device during use.

### BACKGROUND OF THE INVENTION

In state-of-the-art personal care devices, there is a demand for means to track a position of an operative portion of the personal care device relative to the user's anatomy. For example, in the context of oral care devices, there is a demand for tracking of a position of the brush head within the mouth of the user.

There are currently available several smart toothbrushes which incorporate this functionality. For instance, a smart power toothbrush might typically provide users with feedback on brushing behavior, for example on daily brushing frequency and mouth segment coverage. Furthermore, usually the power toothbrush contains a variety of sensors that are integrated in the brush head and/or handle. From the sensor data, inference of various attributes is possible including, amongst others, localization of the brush head inside the mouth.

To provide the user with insights relating to previous brushing sessions, an app run by a mobile computing device may be used which may display a mouth map indicating to the user whether sufficient time was spent cleaning each mouth segment. The app may further be configured to aggregate data over a longer time span (e.g., weeks, months, etc.). Some connected power toothbrush applications can also provide insights as to mouth locations at which too much pressure was applied and/or too much scrubbing.

Similar smart functionalities are also possible for other personal care devices such as shavers, skin-care device, massage devices, light therapy devices and so on.

One approach to performing real-time location tracking of a personal care device is to use data from an inertial measurement unit (IMU), which might include for instance accelerometer data and gyroscope data. An algorithm is used which is capable of mapping the IMU data to location.

However, providing location estimation based on linear mapping from IMU data is a challenge. In particular, there is sometimes not a one-to-one mapping between device orientation and location. For example, in the context of oral care devices, some mouth segments may introduce ambiguity or confusion. For instance, brushing right-outer molars and left-inner molars yield similar brushing handle orientations.

It has been previously recognized that without taking into account a history of previously brushed segments since the start of the personal care session, it is difficult to determine from the IMU signals alone the segment currently being brushed.

Thus, newer developments in this area have seen generation of algorithms which are capable of taking account of a recent history of localization positions since the start of the personal care session. This helps to narrow down the real time position. However, a consequence of this is that the localization accuracy of a real-time prediction model is generally lower at the beginning of a brushing session compared to periods later in the brushing session, since the history of previous positions is much reduced.

US 2020/202520 A1 discloses a system and method for operating a personal grooming/household appliance, including: providing a personal grooming appliance including at least one motion sensor; providing a camera associated with the personal grooming appliance; classifying data received from the motion sensor and from the camera using at least one trained machine learning classifier to generate an augmented classification; and providing user feedback information based upon the augmented classification.

WO 2021/262955 A1 discloses systems, devices, and methods for applying machine learning to provide feedback related to a personal care device.

### SUMMARY OF THE INVENTION

The invention is defined by the claims.

According to examples in accordance with an aspect of the invention, there is provided a method for real-time localization of at least a portion of a personal care device during a personal care session, comprising: obtaining data indicating a starting position for the portion of the personal care device for the personal care session; receiving real-time inertial measurement unit (IMU) signal data during the personal care session; retrieving a real-time localization model from a datastore, wherein the localization model comprises an artificial intelligence (AI) model, the localization model configured to receive a first input comprising data indicative of a starting position of said at least portion of the personal care device and a second input comprising real-time IMU signal data, and to generate as an output a real-time localization signal indicating a real-time predicted location of the device portion; providing the obtained device portion starting position as an input to the localization model; providing the received real time IMU signal data for the personal care session as input to the localization model over the course of the personal care session; receiving an output real time localization signal from the localization model; and preferably generating a data output based on the real-time localization signal.

Thus, embodiments of the present invention propose to improve accuracy of localization, particularly at a start of the personal care session, by providing a localization prediction model which is configured to receive as an input a starting position of the at least portion of the personal care device. The model may be configured to use the starting position as an additional initialization variable for the localization model, allowing the localization model to be differently initialized in dependence upon starting position. This allows the AI model to be configured in a differential way depending upon starting position, allowing for improvement in localization accuracy, particularly at a start of the session.

In some embodiments, the AI model comprised by the localization model is an artificial neural network. In preferred embodiments, the AI model comprised by the localization model is a recurrent artificial neural network.

In some embodiments, the AI model is a long short term memory (LSTM) artificial neural network. An LSTM neural network is a class of recurrent neural network which includes a cell state as well as a hidden state, where the cell state acts as a more persistent (long) 'memory' of the network. Both the hidden state and cell state are passed from each recurrent processing step to the next. This will be explained in more detail later.

In some embodiments, the personal care device is an oral care device, and the method is for real-time localization of a brush head portion of the oral care device within a user's mouth during a cleaning session. The method however can also be used with any other type of personal care device, such as a hair removal device (e.g. shaver), skin-care device, light therapy device, massage device, etc.

In some embodiments, the step of obtaining data indicating a starting position comprises receiving from a user interface a user input indicative of a planned starting position. In other words, the user specifies the planned starting position.

In some embodiments, the user interface may be a user interface comprised by a mobile computing device.

In some embodiments, the step of obtaining the data indicating a starting position comprises accessing a datastore recording historical personal care data for the user and determining a predicted starting position based on processing of the historical personal care data.

In some embodiments, the historical personal care data for the user includes historical starting position data, and the predicting the starting position comprises processing of the historical starting position data.

For example, in some embodiments, the aforementioned historical personal care data includes IMU signal data for historical personal care sessions, and wherein the predicting the personal care session starting position comprises processing the historical IMU signal data to estimate historical starting positions, and predicting the starting position based on the estimated historical starting positions. In some embodiments, the method may further comprise generating a control signal for controlling a user interface to generate a user-perceptible prompt requesting confirmation of the predicted starting position.

In some embodiments, the method comprises additionally: receiving a user setting for the starting position; comparing the user setting for the starting position with the predicted starting position; and, responsive to detecting a disparity between the two, generating a control signal for controlling a user interface to generate a user-perceptible prompt requesting confirmation of the predicted starting position.

In some embodiments, the method may be executable in either a first a second mode, where in the first mode the localization is performed using knowledge of the starting position and in the second mode the localization is performed without using knowledge of the starting position. For example the method may further comprise a preliminary mode selection step comprising selecting a first or second mode; wherein responsive to selection of the first mode, the steps of the method according to any example embodiment described above are executed, and responsive to selection of the second mode, a second localization module is retrieved configured to perform real time localization without an input indicative of starting position, and providing the real time IMU signal data as input to the second localization model as input.

In some embodiments, a single localization model may be provided which is operable in two different states: one designed for receiving an input indicative of starting position, and one designed to operate without receiving such an input. For example, according to one or more embodiments, the localization model may be initializable in two states: a first state in which the localization model is configured for generating localization data based on using an input indicating a starting position and a second state in which the localization model is configured to generate localization data without using an input indicating starting position. The method may further comprise a preliminary mode selection step comprising selecting a first or second mode. Responsive to selection of the first mode, the localization model may be used in the first initialization state, and responsive to selection of the second mode, the localization model may be used in the second initialization state.

In some embodiments, the localization model comprises an LSTM artificial neural network, i.e. the AI model of the localization model comprises an LSTM artificial neural network. The method may comprise initializing a cell state and hidden state of the LSTM artificial neural network in dependence upon the first input comprising the data indicative of a starting position of said portion of the personal care device.

In some embodiments, the localization model comprises at least one embedding layer configured to map the first input indicative of a starting position to at least one embedding vector, and is configured to initialize the cell state and hidden state of the LSTM artificial neural network based on the at least one embedding vector.

In some embodiments, the localization model comprises at least two embedding layers, one embedding layer for outputting an embedding vector for initializing the hidden state based on the input indicative of starting position, and one embedding layer for outputting an embedding vector for initializing the cell state based on the input indicative of starting position.

In some embodiments, the starting position may be encoded in the form of an integer number having a defined range of possible values. In some embodiments, the different values of the integer number may correspond to different body segment locations, e.g. different mouth segment locations.

In some embodiments, the IMU signal data may include 3D accelerometer signal data and 3D gyroscope sensor data.

Another aspect of the invention is a computer program product comprising computer program code configured, when run on a processor, to cause the processor to perform a method in accordance with any embodiment described in this document or in accordance with any claim of this application. The code may be configured to cause the processor to perform the method when the processor is operatively coupled with an inertial measurement unit (IMU) comprised by a personal care device, and operatively coupled with a datastore storing a real-time localization model comprising an artificial intelligence (AI) model, the localization model configured to receive a first input comprising data indicative of a starting position of said at least portion of the personal care device and a second input comprising real-time IMU signal data, and to generate as an output a real-time localization signal indicating a real-time predicted location of the device portion. Another aspect of the invention is a processing device for use in real-time localization of at least a portion of a personal care device during a personal care session, comprising: an input/output; and one or more processors configured to perform a method. The method may comprise: obtaining data indicating a starting position for the portion of the personal care device for a personal care session; receiving at the input/output real-time inertial measurement unit (IMU) signal data during the personal care session; retrieving a real-time localization model from a datastore, wherein the localization model comprises an artificial intelligence (AI) model, the localization model trained to receive a first input comprising data indicative of a starting position of said portion of the personal care device and a second input comprising real-time IMU signal data, and to generate as an output a real-time localization signal indicating a real-time predicted location of the device portion; providing the obtained head portion starting position as an input to the localization model; providing the received real time IMU signal data for the personal care session as input to the localization model over the course of the personal care session; receiving an output real time localization signal from the localization model; and preferably generating a data output based on the real-time localization signal and optionally coupling the data output to the input/output.

Another aspect of the invention provides a system comprising: a personal care device comprising an integrated IMU for generating IMU signal data during personal care sessions and comprising a wireless communication module for transmitting the IMU signal; and a processing device in accordance with any embodiment described in this document or in accordance with any claim of this application, configured to receive the IMU signal data transmitted by the personal care device. The personal care device in some embodiments is an oral care device such as a powered toothbrush.

The IMU signal data may be received directly from the personal care device via a direct wireless communication channel, for instance in the case that the processing device is comprised by a mobile computing device. The mobile computing device and the personal care device may be in communicable relationship via a local wireless connection e.g. Bluetooth or another technology. Alternatively, the IMU sensor data might be received via an intermediary communication channel, e.g. via an internet connection or local area network connection. The processing device could be a cloud-based processing device in some embodiments.

In some embodiments, the system comprises a mobile communications device comprising a user interface.

The processing device may be comprised as a component of the mobile communications device in some embodiments.

Alternatively, the processing device could be external to and separate from the mobile communications device, e.g. the processing device might be in the cloud.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows an architecture of an example basic neural network model for localizing a part of a personal care device;
Fig. 2 illustrates an example encoding of different segments of the mouth as part of an example implementation of a localization method;
Fig. 3 shows accuracy of localization predictions generated by the basic neural network model as a function of time progressed since a start of the personal care session;
Fig. 4 outlines steps of an example method according to one or more embodiments of the invention;
Fig. 5 outlines components of an example processing device and system according to one or more embodiments of the invention;
Fig. 6 outlines a processing flow according one or more embodiments of the invention;
Fig. 7 shows an architecture of an example neural network model according to one or more embodiments of the invention; and
Fig. 8 shows accuracy of localization predictions generated by the neural network model according to one or more embodiments of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an improved method for real-time localization of at least a portion of a personal care device relative to an anatomy of the user, based on use of an artificial intelligence prediction model. To improve accuracy of localization, particularly at a start of the personal care session, the prediction model is configured to receive as an input a starting position of the at least portion of the personal care device. The prediction model may be differently initialized in dependence upon the received starting position. This compensates for the lack of information about previous localization positions in the session which is encountered at a start of a session.

For ease of explanation and conciseness, explanations below may be presented with reference particularly to an oral care device, and more particularly to tracking location of a brush head within the mouth of a user. However, it will be appreciated that the general principle of localization of a portion of a device relative to an anatomy area can be applied without loss of generality to a broad range of different personal care devices.

As described previously, location estimation of a personal care device relative to an anatomy (e.g. brush head location estimation within the mouth), based on IMU data is a challenging problem. For example, some mouth segments may introduce ambiguity or confusion. For instance, brushing right-outer molars and left-inner molars yield similar brushing handle orientations. Without taking into account a session history of previously brushed segments since the session start, it is difficult to determine from the IMU signals the currently brushed segment.

In other words, to robustly detect, in real-time, a current brushing location, the model requires contextual information (e.g. brushing movements and/or mouth segment transitions). However, this information is lacking at the very start of a brushing session.

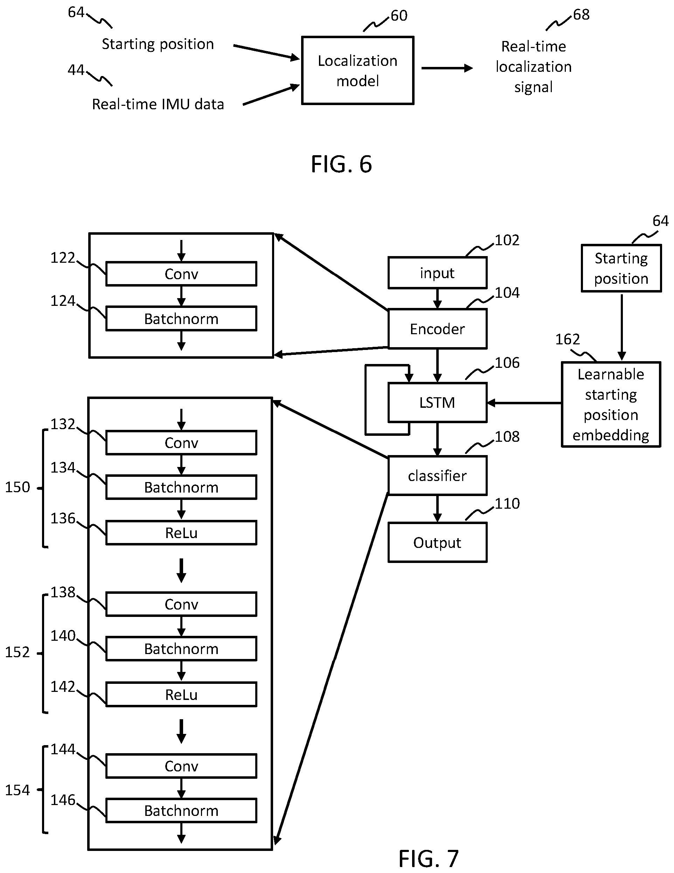

To further understand the principles underlying the presently proposed inventive concept, there will now be described an example of a basic localization algorithm which is not in accordance with the invention. Some particular embodiments of the present invention represent a development of this algorithm. In particular, features described in relation to this model may be applied also to the model which will be later described with reference to Fig. 7.

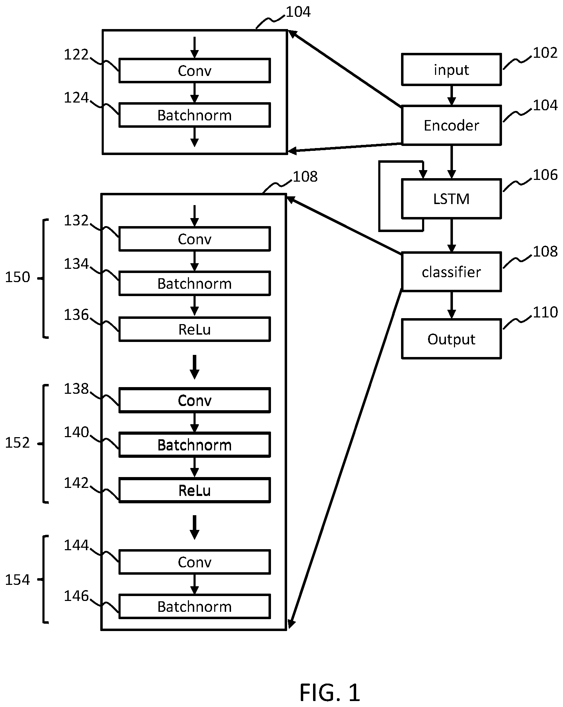

The model architecture is outlined in Fig. 1. The model comprises an AI-enabled algorithm (an AI model) operable to process sensor data and generate real-time predictions of the location of the relevant portion of the personal care device relative to an anatomy of the user. The AI model comprises an artificial neural network, and in particular a recurrent neural network.

The block diagram of Fig. 1 illustrates the base network architecture of this real-time brush head localization model. The model in this example comprises a convolutional long short-term memory (LSTM) artificial neural network architecture.

An LSTM artificial neural network is a type of recurrent artificial neural network. In common with other types of recurrent neural network, it is capable of processing not only discrete data items, such as images, but also extended sequences of data, such as data signals. This makes it well suited to processing the real-time IMU data signal in the present context. In contrast to other types of recurrent neural network, its network structure includes feedback connections as well as feedforward connections. A standard recurrent neural network can be understood as encompassing a short-term memory and long-term memory, wherein the connection weights and biases in the network represent long term memory and are updated only once per training episode, and the activation patterns in the network represent short-term memory and are changed once per time interval within the input data. The concept underlying a long short-term memory network is to realize a short-term memory in the network that lasts longer than one time step.

A neural network model may comprise one or more LSTM units. Typically, an LSTM unit has a structure which comprises an LSTM cell, wherein the cell comprises an input gate, an output gate and a forget gate. The gates have the function of controlling flow of data in and out of the cell. The LSTM cell receives as input the latest version of a hidden state and cell state and generates as output an updated version of the hidden state and cell state. The cell state provides a memory function wherein data values are 'remembered' over arbitrary time periods. This allows the network to handle extended data series in which relevant events may occur at arbitrary time periods apart. Having a short-term type memory which can persist over arbitrary time periods thus allows such patterns to be detected.

As is well known, during operation for prediction, a recurrent neural network operates by recurrently processing a hidden state, the hidden state containing a set of variables, and the hidden state being passed as an output from one step in the network processing to the next step. An LSTM additionally uses a cell state, which carries 'memory' information lasting a longer time period that the hidden state. At each processing step of the network, the LSTM takes as input the hidden state and cell state output from the previous step, and acts to generate an updated hidden and cell state.

Thus, the hidden state means a set of variables used within the recurrent operations of the neural network and is effectively an input to what is done in the model at a given step and is computed based on data at previous time steps. It could be understood as the result of one hidden layer which is then passed as input to a next hidden layer.

The cell state effectively acts as a memory and carries information all the way along the processing chain and is updated in each processing step using the various gates of the LSTM cell (the forget gate, the input gate and the output gate). The cell state helps the network take account of longer-term dependencies. The cell state could be compared by analogy to a conveyor belt; it runs straight down the entire network, with only some minor linear interactions. The hidden states by contrast could be compared by analogy to a set of buckets. The hidden state at time t is a set of values that represents what the network is "remembering" at that time. The hidden state gets reset at the beginning of every sequence, so it doesn't contain any information about previous sequences.

With regards to training, a model which encompasses one or more LSTM network units can for example be trained with a supervised learning approach. For example, a training dataset may be used which comprises a set of training sequences. Each training sequence may comprise an example signal data series. For example, in the present context, the training data could comprise a set of example IMU data signals. An optimization algorithm such as a gradient descent algorithm might be employed in combination with backpropagation through time to compute the gradients required during the optimization process. The aim is to change each weight of the LSTM network in proportion to the derivative of the error (at the output layer) with respect to the relevant weight.

For further details concerning LSTM neural networks, reference is made to the publicly accessible document: Hochreiter, Sepp, and Jürgen Schmidhuber. "Long short-term memory." Neural computation 9.8 (1997): 1735-1780. This provides a detailed explanation of the structure and implementation of suitable LSTM networks. In particular, sections 2 and 3 of this document provide a background to the particular challenges that LSTM networks are capable of overcoming as compared with other types of network. Section 4 provides a discussion of the general structure of an LSTM network. Section 5 describes a series of example implementations and associated results.

Referring again to the example neural network model of Fig. 1, the input data 102 to the model comprises a real-time IMU data signal. A first component of the model comprises an encoder 104 with a single 1D convolutional block or layer 122 followed by a Batch Normalisation ("Batchnorm") layer 124. The encoder 102 is capable, during training, of learning feature representations of the input 102 sensor data. The feature representations are captured in feature maps. After training, the encoder operates to encode input sensor data 102 in terms of the feature representations learned during training.

The output of the encoder 104 is fed into a single layer long-short-term-memory (LSTM) neural network unit 106. During training, the LSTM unit is capable of modelling the temporal dependencies between the feature map activations.

The output of the LSTM block (i.e., the final hidden state) is input to a classifier 108 head, which comprises a 1D convolutional layer 154 that is preceded by two 1D convolutional blocks 150, 152. By way of additional background, in neural networks, the term 'hidden layer' is used to refer to the layer located between the input and output of the algorithm, in which the function applies weights to the inputs and directs them through an activation function as the output. By contrast, the 'hidden state', in the context of a recurrent neural network, means a set of variables used within the recurrent operations of the network. A hidden state is effectively an input to what is done in the model at a given step and is computed based on data at previous time steps. It could be understood as the result of one hidden layer which is then passed as input to a next hidden layer.

Each of the convolutional blocks 150, 152 comprises a respective convolutional layer 132, 138, followed by a Batch Normalization layer 134, 140, followed by a rectifier (ReLu) layer 136, 142. The final convolutional layer group 154 includes a convolutional layer 144 in combination with a Batch Normalization layer 146. It is noted also that other configurations are possible e.g., having a varying number of layers in the encoder 104, LSTM 106 and classification module 108.

The output 110 of the model, as generated by the classifier module 108 using the LSTM 106 output, comprises a respective probability prediction for each of a plurality of positional (sub)segments of a relevant anatomy for each time point of the input data signal 102 in real time. From these a most likely one of the positional sub-segments for the current location of the relevant device portion can be identified.

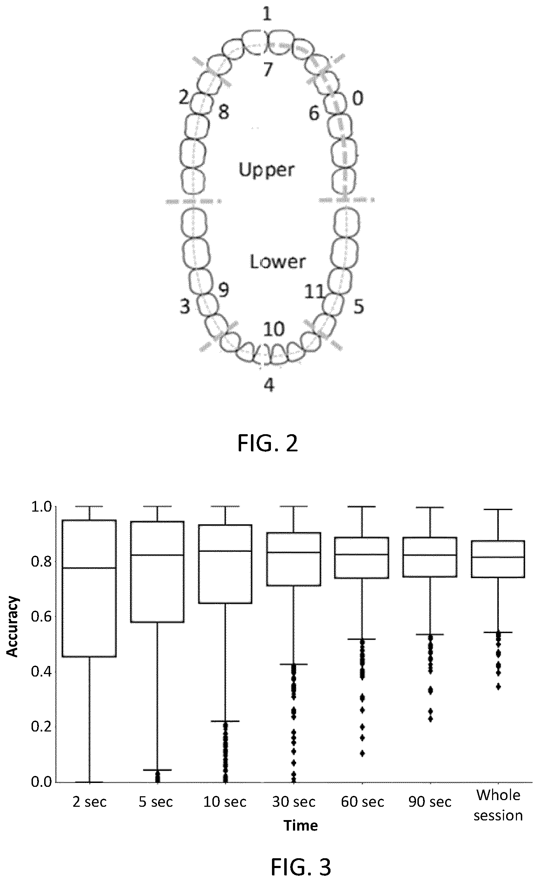

By way of example, an exemplary implementation of the model was generated and trained for predicting real-time location of a brush head within the mouth. For this purpose, the classifier module 108 was configured to generate 12 (probability) prediction outputs, one for each of 12 location sub-segments of the mouth. Fig. 2 schematically illustrates the 12 location sub-segments of the mouth. The numbered layers correspond as follows:
0: Upper right outer
1: Upper Front Outer
2: Upper Left Outer
3: Lower Left Outer
4: Lower Front Outer
5: Lower Right Outer
6: Upper Right Inner
7: Upper Front Inner
8: Upper Left Inner
9: Lower Left Inner
10: Lower Front Inner
11: Lower Right Inner

Using such a prediction model, the localization accuracy at the beginning of a brushing session is generally lower in comparison to time periods later on in the session, when the user has brushed for a period of time and thus there is a greater amount of recent history from which predictions can be generated. By virtue of the memory functionality of the LSTM unit discussed above, once some time has elapsed in the personal care session, the model is capable of accounting for temporal dependencies in the input data.

To verify this hypothesis, the baseline model of Fig. 1 was built, trained and tested using a holdout/test dataset which consisted of IMU data signals for 1056 previously recorded brushing sessions.

The results are shown in the boxplot of Fig. 3.

It can be observed that there is a large variation in localization accuracy at the beginning of a brushing session. Each boxplot indicates the localization accuracy (y-axis) in the first n seconds from the start of a brushing segment (x-axis). The last boxplot represents the accuracy averaged over a full cleaning session.

By way of example, it can be observed that the median accuracy in the first n=2 seconds is about 78%. In addition, the boxplot quartiles indicate that there is a large spread around the mean, especially in the lower (i.e., 1^{st} and 2^{nd}) quartiles. Whereas the accuracy boxplots for longer periods from the start of the session (e.g., n=90 seconds) indicate less variation in the lower quartiles and a slightly higher median accuracy of about 82%. This indicates that the prediction accuracy improves as time elapses since the session start. After a longer time period, the model has access to greater amount of context about the brushing session movement history to estimate the current segment being brushed.

Thus, it is the realization of the inventors that an explanation for the low performance at the session start is the fact that the real-time localization model of Fig. 1 does not utilize any prior knowledge on the actual starting position (i.e., the mouth segment in the case of the model of Fig. 1) of the brush head inside the mouth. The same principle would apply for any personal care device being tracked relative to any relevant anatomy.

Embodiments of the invention propose to address the above-identified problem by using an AI model which is configured to infer a real-time current location of at least a portion of a personal care device, and wherein the inference is conditioned by information about a starting position of said at least portion of the personal care device.

In accordance with one particular set of embodiments of the present invention example, it is the proposal to address the above-discussed problem by modifying the basic model architecture of the model of Fig. 1, such that the LSTM module of the model is adapted to receive as a further input a representation of a starting position of the portion of the personal care device being tracked. This can be provided as input to the localization model upon inference start (i.e. at a start of a personal care session.). By way of one example, in the case of tracking a brush head position in the mouth, the brush head starting position (at the start of the session) can be encoded as one of the mouth segments for which prediction outputs are generated by the classifier module, (e.g. encoded as an integer value between 0-11).

One particular set of embodiments of the invention propose to use a recurrent artificial neural network comprising at least one LSTM unit to infer a real-time current location of at least a portion of a personal care device, wherein the inference is conditioned by the starting position of said at least portion of the personal care device. However, more generally, any AI model trained to receive starting position as an input could be used.

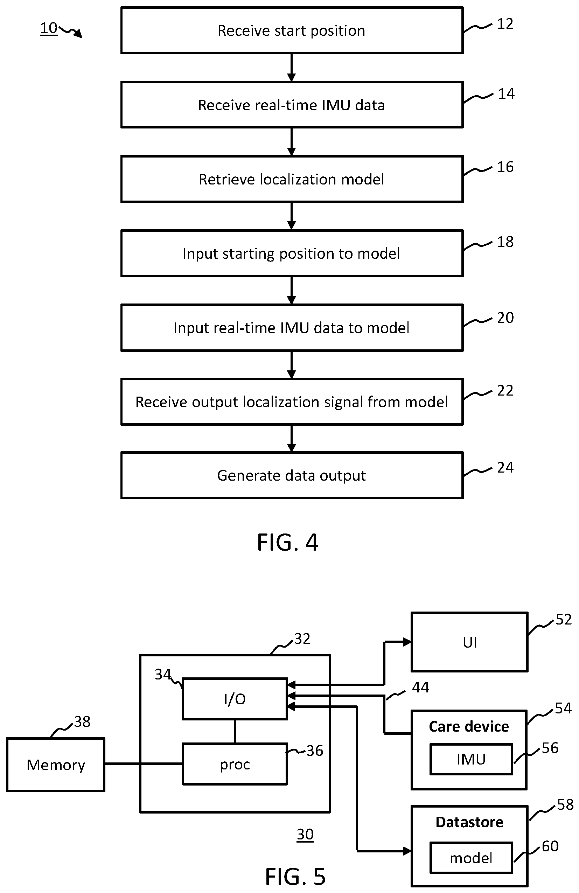

Fig. 4 outlines in block diagram form steps of an example method 10 according to one or more embodiments. The steps will be recited in summary, before being explained further in the form of example embodiments.

The method 10 is for real-time localization of a portion of a personal care device during a personal care session.

The method 10 comprises obtaining or receiving 12 data indicating a starting position for the portion of the personal care device for the personal care session.

The method 10 further comprises receiving 14 real-time inertial measurement unit (IMU) signal data during the personal care session.

The method 10 further comprises retrieving 16 a real-time localization model from a datastore. The localization model comprises an artificial intelligence (AI) model, the localization model trained to receive a first input comprising data indicative of a starting position of said portion of the personal care device and a second input comprising real-time IMU signal data, and to generate as an output a real-time localization signal indicating a real-time predicted location of the device portion.

The method 10 further comprises providing 18 the obtained device portion starting position as an input to the localization model.

The method 10 further comprises providing 20 the received real time IMU signal data for the personal care session as input to the localization model over the course of the personal care session.

The method 10 further comprises receiving 22 an output real time localization signal from the localization model.

The method 10 preferably further comprises generating 24 a data output based on the real-time localization signal.

As noted above, the method can also be embodied in hardware form, for example in the form of a processing device which is configured to carry out a method in accordance with any example or embodiment described in this document, or in accordance with any claim of this application.

To further aid understanding, Fig. 5 presents a schematic representation of an example processing device 32 configured to execute a method in accordance with one or more embodiments of the invention. The processing device is shown in the context of a system 30 which comprises the processing device. The processing device alone represents an aspect of the invention. The system 30 is another aspect of the invention. The provided system need not comprise all of the illustrated hardware components; it may just comprise a subset of them.

The processing device 32 comprises one or more processors 36 configured to perform a method in accordance with that outlined above, or in accordance with any embodiment described in this document or any claim of this application. In the illustrated example, the processing device further comprises an input/output 34 or communication interface.

In the illustrated example of Fig. 5, the system 30 further comprises a user interface 52. The localization signal may be communicated to the user interface in some embodiments for communicating the localization information to the user. In some embodiments, as will be described below, the indication of the starting position may be input by the user at the user interface 52 and received by the processing device 32 and fed as input to the localization model. In some embodiments, the user interface may be comprised by a mobile computing device such as a smartphone. In some embodiments, the user interface may be comprised by the personal care device.

The system 30 in this example further comprises the personal care device 54 itself. The personal care device 54 comprises an inertial measurement unit (IMU) 56. The IMU may include one or more accelerometers for generating accelerometer data. The IMU may include at least one gyroscope for generating gyroscope data. In some embodiments, the IMU signal data output from the IMU may comprise accelerometer data and/or gyroscope data. In some embodiments, the IMU signal data output from the IMU may comprise 3D accelerometry and 3D gyroscopic sensor readings. The IMU signal data 44 may be communicated from the IMU of the personal care device 54 to the processing device 32 for providing as input to the localization model.

The system 30 in this example further comprises a datastore 58 which stores the localization model 60. The method executed by the processing device 32 may comprise retrieving the localization model 60 from the datastore.

The invention can also be embodied in software form. Thus, another aspect of the invention is a computer program product comprising computer program code configured, when run on a processor, to cause the processor to perform the method in accordance with any embodiment described in this document, or in accordance with any claim of this application.

It is noted, with reference again to the system 30 of Fig. 5, that the system or the processing unit 32 may include a memory 38 which stores computer program instructions for execution by the one or more processors 36 of the processing unit to cause the one or more processors to perform a method in accordance with any of the embodiments described in this disclosure.

The processing of the sensor data 44 from the IMU 56 could be handled in several ways depending upon the architecture of the system. For example, in some embodiments, the method of the invention might be implemented by a software module. The software module could be implemented by a processing device comprised by a mobile computing device, or by the personal care device, or by a separate processing device, or could be implemented by a remote server or a cloud server. By way of just one example, the, the IMU sensor data might be synchronized to a smartphone app and a software module integrated in the app may run the method 10 to infer the brush head location using the sensor data. Alternatively, the software for brush head localization could be embedded in the personal care device itself, e.g. in the handle of the device. Alternatively again, sensor data could be synchronized to a cloud infrastructure, and wherein a software module for executing the method 10 is also executed as part of the cloud infrastructure. The output from the method may be communicated to the user and presented using a user interface, e.g. by an app run by a smartphone or by a user interface comprised by the personal care device.

One application area is in the domain of oral care. In some embodiments, the personal care device 54 is an oral care device, the personal care session is an oral cleaning session. The at least portion of the device which is tracked may include a brush head for example. In further embodiments, the personal care device may be a skin care device, e.g. a light therapy device, and the personal care action is skin care action and the personal care session is a skin care session. The at least portion of the device may be an operative skin treatment portion, e.g. a light output area in the case of a light therapy device. In further embodiments, the personal care device is a grooming device, e.g. a shaver, and the personal care action is a grooming action (e.g. shaving), and the personal care session is a grooming session (e.g. shaving). The at least portion of the device which is tracked may include a shaver head for example. In further embodiments, the personal care device is a muscle/joint care device (e.g. a massage device). In each case, the personal care device is a device for application to an area of the user's body for a care function, whereby the normal use of the device inherently involves moving the device around different locations of one or more areas/anatomies of the body.

To illustrate and exemplify the inventive concepts, examples may be presented below with reference to an oral care device, for which the aforementioned personal care action is cleaning action, and the personal care session is an oral cleaning session. However, it will be recognized that the principles outlined are easily applicable to other types of personal care device, such as, by way of example, a skin care device, e.g. a light therapy device, a grooming device, e.g. a shaver, or a muscle/joint care device (e.g. a massage device). With any personal care device, the device is typically designed for application to an area of the user's body for a care function, and may be moved around different locations. Thus it can be seen how the principles of the general inventive concept outlined above, and described below, can be used in any personal care device. Hence, reference in the below-described embodiments to an oral care device may be replaced by reference to any other personal care device without substantive change to the inventive principles. Likewise, reference to cleaning action can be replaced by reference to personal care action and reference to a cleaning session can be replaced by reference to a personal care session.

In the case that the personal care device 54 is an oral care device, the oral care device may be a powered toothbrush in some embodiments. The toothbrush may have a brush head carrying an array of cleaning elements such as bristles.

The processing flow of data according to one or more embodiments is shown in schematic form in Fig. 6. As illustrated, the localization model 60 is configured for receiving at least two data inputs. A first data input comprises data representing a starting position 64 for the portion of the personal care device for the personal care session. The second input comprises real-time inertial measurement unit (IMU) signal data 44 for the personal care session. The localization model 60 generates as output a real-time localization signal 68.

With regards to the localization model, as discussed above, this comprises an artificial intelligence model. The AI model may be an artificial neural network. In preferred embodiments, the AI model is a recurrent artificial neural network. The recurrent neural network may be an LSTM artificial neural network.

An example implementation of the localization model according to one or more embodiments will now be described with reference to Fig. 7. The model structure may be the same as that of the model of Fig. 1 (already described above), except that the LSTM unit 106 is configured for receiving an additional input indicative of the starting position 64 of the at least portion of the personal care device which is being localized, and for utilizing the input starting position in the localization inference. In some embodiments, this may be implemented through learnable embeddings 162, as will now be explained.

In particular, in some embodiments the localization model comprises a LSTM artificial neural network, and wherein the method comprises initializing a cell state and hidden state of the LSTM artificial neural network in dependence upon the first input comprising the data indicative of a starting position of said portion of the personal care device. More particularly, in some embodiments, the localization model comprises at least one embedding layer configured to map the input starting position to at least one embedding vector, and is configured to initialize the cell state and hidden state based on the at least one embedding vector. Even more particularly, in some embodiments, the localization model comprises at least two embedding layers, one embedding layer for outputting an embedding vector for initializing the hidden state based on the input indicative of starting position, and one embedding layer for outputting an embedding vector for initializing the cell state based on the input indicative of starting position.

This will now be explained in more detail.

In the context of a neural network, an embedding is a lower-dimensional vector representation of relationships which are present in higher dimensional input data. More particularly, an embedding is a mapping of a discrete (categorical) variable to a vector of continuous numbers. In the context of neural networks, embeddings are low-dimensional, learned continuous vector representations of discrete variables. Distances between embedding vectors capture similarity between different datapoints, and can capture higher-level essential concepts in the original input. Neural network embeddings are in fact an inherently generated by-product of a normal supervised training process. In particular, the embeddings are vector representations of the parameters (weights) of the network which are adjusted during training to minimize loss on the supervised task. The resulting embedded vectors are representations of categories, where similar categories - relative to the task- are closer to one another. In the present context, the task is the localization of the at least portion of the personal care device. The categories would be the different starting positions, for example as encoded with one of a discrete set of integer numbers corresponding to different location segments. Thus, in the context of the present invention, there would be one embedding vector per possible starting position (e.g. where there are a discrete number of starting positions, encoded with integer numbers corresponding to e.g. a particular segment of the anatomy). In operation, an embedding layer would provide the function of mapping an input indicator of starting position (e.g. in the form of an integer number) to a corresponding one of a set of learned embedded vectors, and where the corresponding learned embedding vector can then be used as initialization for the hidden state and/or cell state of the LSTM. As will be discussed below, there may be two embedding layers, for outputting a learned embedding vector for initializing the cell state and one for outputting a learned embedding vector for initializing the hidden state.

As has been discussed above, a recurrent neural network operates by recurrently processing a hidden state, the hidden state containing a set of variables, and the hidden state being passed as an output from one step in the network processing to the next step. An LSTM additionally uses a cell state, which carries 'memory' information lasting a longer time period than the hidden state. Each processing step of the LSTM takes as input the hidden state and cell state output from the previous step, and acts to generate an updated hidden and cell state.

Thus, the hidden state means a set of variables used within the recurrent operations of the neural network and is effectively an input to what is done in the model at a given step and is computed based on data at previous time steps. It could be understood as the result of one hidden layer which is then passed as input to a next hidden layer.

The cell state effectively acts as a memory and carries information all the way along the processing chain and is updated in each processing step using the various gates of the LSTM cell (the forget gate, the input gate and the output gate).

In the context of some embodiments of the present invention, each embedding vector therefore has the same size/dimensionality as the hidden state or the cell state respectively.

Given an input starting position, e.g. as encoded by an integer number, the model during training learns the latent embedding vectors in an end-to-end manner while training the rest of the model parameters. In particular, at the start of the training, the relevant starting position for a given training data signal is input (e.g. in the form an integer number), and this is passed as input to two different embedding layers: one embedding layer for the hidden state and one embedding layer for the cell state. To explain: in general, the LSTM comprises two states internally, i.e. hidden and cell states. Therefore, it is proposed to use two embedding layers to learn and condition each of the mentioned states based on starting position.

Each embedding layer maps the starting position (e.g. integer) to latent vectors of a same size as the LSTM hidden state or cell state. This latent embedding is utilized by the LSTM model during both training and inference to predict a real-time localization, in the form of a class-label associated with one of a discrete set of possible locations.

During operation, for inference, the learned embeddings behave effectively as a lookup table, i.e., mapping the input starting position to a corresponding embedding vector for each of the hidden state and cell state. The embedding vectors are then used to define an initialization for the hidden state and cell state. In more concrete terms, this means that the starting state for the hidden state is set with values defined by the hidden state embedding vector output from the respective embedding layer, and the starting state for the cell state is set with values defined by the cell state embedding vector output from the respective embedding layer.

Thus, the embeddings are learned during model training (and embedding layers are part of the model), and can map an input starting position (e.g. represented as an integer number) to a real-valued vector output that is used as an initialization for the LSTM model's hidden and cell states that are otherwise initialized to zero at the beginning of the inference procedure. The hidden and cell states get recurrently updated during operation of the model as part of the network operations.

Note that if no starting position were to be provided, there are two options for how to initialize the hidden and cell states: a default initialization could be used which for example corresponds to an 'average' starting position based on global statistics (e.g. most frequent starting position in the general population), or the LSTM hidden and cell states could be initialized with zeros.

The high-level model architecture is shown in Fig. 7.

The structure of the model may be the same as that of Fig. 1 (details discussed above), apart from the additional use of the learned embeddings 162 which correspond to the different possible input starting positions 64 of the at least portion of the personal care device. The embedding corresponding to the input starting position 64 is used to initialize the hidden and cell states of the LSTM unit 106 of the neural network at the start of a personal care session.

Thus, embodiments of the present invention propose to integrate starting position to develop a conditional variant of real-time segmentation mode with the aim of improving model generalization at the beginning of the session. To this end, it is proposed to have learnable embedding vectors 162 for each of the possible starting positions (i.e., an output class) that can be used as initialization for hidden and cell states of the LSTM.

This minimal yet effective approach significantly improves model generalization with no overhead.

It is noted that any of the implementation details described in relation to the model of Fig. 1 can also be applied for the model of Fig. 7, which is similar to the model of Fig. 1 except for the additional inclusion of the one or more embedding layers.

The above represents just one possible approach to providing a model in which the starting position may be utilized as an input. Alternative approaches to integrating starting position in the deep neural network model are possible.

According to one alternative, in LSTM-based models, instead of having separate learnable embedding layers for the hidden and cell states, a single embedding layer could be shared to further reduce the model size. The dimensionality of these states is the same; therefore, an output of a single embedding layer can be used as an initialization of both states. However, as explained above, the hidden and cell states are meant to learn different things and control different aspects of the LSTM cell, and for this reason used of two embedding layers may be preferred.

Furthermore, additionally or alternatively, as opposed to utilizing the latent embedding vectors as initialization for states of the LSTM, it is also an option to condition the output of the LSTM unit 106 by summation with latent vectors. In this case, the embedding layer provides an output that has a same dimensionality as the output of the LSTM. For instance, at the beginning of the training, when defining neural network architecture, one might set the LSTM output to be size of 128, and set the embedding layer output size also to 128. Now, we can sum the outputs of LSTM and embedding layers, simply with element-wise summation over vectors. In deep learning libraries, such as Pytorch, it can be achieved via *torch. add* function.

Furthermore, additionally or alternatively, feature-wise linear modulation (FiLM) can be incorporated at the level of the convolutional encoder 104 to condition the features in earlier layers of the model. With regards to the feature-wise linear modulation, reference is made to the paper: Perez, Ethan, et al. "Film: Visual reasoning with a general conditioning layer." Proceedings of the AAAI Conference on Artificial Intelligence. Vol. 32. No. 1. 2018.

Formally, feature-wise linear modulation is a general conditioning layer to modulate the features of an input. The conditioning layer is a neural network that takes as an input the features of another layer (e.g., encoder) and the output of the previous FiLM layer (if available), and outputs a set of modulation parameters. These modulation parameters are then used to modulate the features of the input (by performing element-wise multiplication and addition), producing a new feature map. The FiLM layer can be stacked on top of other layers to form a deep FiLM network.

The FiLM layer is useful because it allows the network to learn how to modulate the features of an input signal to produce a desired output. For example, if the goal is to incorporate starting position to make it more likely for the network to correctly predict real-time localization position toward the beginning of the personal care session, then the FiLM layer can learn to modulate the features of the previous layers such that the starting position is incorporated in the features to increase the likelihood of the desired output.

At the implementation level, the output of the convolutional encoder 104 (as illustrated in Fig. 1 or Fig. 7) is passed as an input to a FiLM layer along with the output of embedding layer that is used as condition mechanism. The FiLM layer performs modulation of the encoder features based on an embedding vector representing the starting position. Finally, its output is further passed to the LSTM.

Note that the FiLM layer acts just like any other layer in the deep model, and comprises a single linear layer to transform a conditional input (which in the present case is the embedding layer's output) that is used to update the encoder output via element-wise multiplication and addition operations.

We note that the above approaches could also be combined together to further enhance the model performance.

As noted above, in advantageous embodiments, the starting position is encoded in the form of an integer number having a defined range of possible values.

The different values of the integer number may correspond to different body segment locations, e.g. different mouth segment locations.

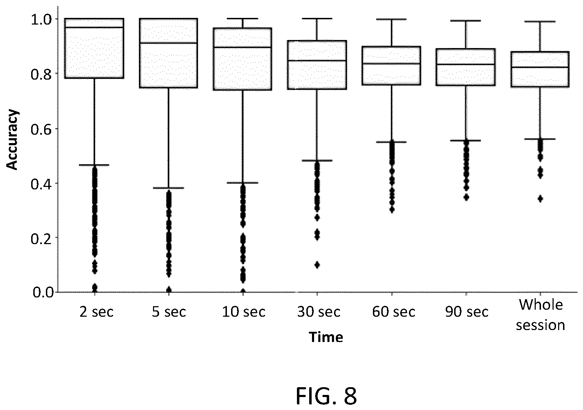

Fig. 8 illustrates the model performance of the proposed invention using the same test dataset which was used for testing the performance of the basic model outlined in Fig. 1, results of which were presented in Fig. 3. For testing the model, the model was supplied as inputs for each cleaning session: the real-time IMU signal data for the session, and the true starting position of the session, as derived from reference data. Comparing the results of the basic model in Fig. 3 with the results of the proposed model in Fig. 8, it is clear that both the mean localization accuracy and the spread in localization accuracy about the mean is substantially improved for the proposed model. Particularly for time periods near the start of the personal care session (e.g. 2 seconds, 5 seconds, 10 seconds from the start), the mean accuracy and accuracy spread is very greatly improved. This therefore demonstrates that the additional use of the starting position as a conditional initialization parameter in the model improves localization accuracy toward the start of the personal care session.

Some optional implementation features of the method 10 in operation will now be discussed.

To implement the method, a personal care device, such as a power toothbrush, may be provided with electronics to permit synchronization with a software module, such as an app, running on a computing device such as a mobile computing device, or running in the cloud. The personal care device comprises an IMU sensor as discussed above, e.g. configured with a tri-axial accelerometer and tri-axial gyroscope.

In some embodiments, the user may be prompted by the app to input a preferred or planned starting position for the personal care device, for instance a planned segment in the mouth at which they plan to begin brushing. In other words, in some embodiments, the obtaining the data indicating a starting position comprises receiving from a user interface a user input indicative of a planned starting position. The starting location may be added to a settings dataset. Optionally the settings dataset might additionally be transferred to the personal care device, e.g. via a wireless connection such as Bluetooth.

A user interface may be provided which permits user input, for instance of the planned starting position.

Optionally, in some embodiments, software module may comprise one or more algorithms configured to determine automatically a predicted starting position based on a personal care device usage history of the user, e.g. brushing history. In other words, the obtaining data indicating a starting position may comprise accessing a datastore recording historical personal care data for the user and determining a predicted starting position based on processing of the historical personal care data. If the starting position is determined this way, user interface may be further controlled to provide a prompt which allows a user to confirm or adjust the automatically determined starting position. In other words, the method may comprise generating a control signal for controlling a user interface to generate a user-perceptible prompt requesting confirmation of the predicted starting position.

A common way to implement the user interface (UI) is using an App, for example as run by a mobile computing device such as a smartphone. In other words, the user interface may be a user interface comprised by a mobile computing device. However, this is by no means the only way to implement a UI. The UI can also be implemented in the cloud, or even in the personal care device, depending on the processing capabilities and connectivity.

With regards to execution of the pre-trained localization model, this may for example be implemented by a processing module comprised by a mobile computing device, or by a processing module of a cloud computing architecture, or by a processing module of the personal care device. The model outputs a real-time localization signal indicative of a real-time location of the personal care device, e.g. a location of a brush head in the mouth.

Upon the brushing session start, the user may be prompted by a prompt generated by the user interface to position the at least portion of the personal care device at the indicated starting position. The system may be configured such that a session start is triggered by a user activation signal generated by actuation of a user control element, such as a user pressing a power button on the personal care device. Upon session start, the IMU signal data may be sampled from the sensor unit and supplied as input to the localization model in real time, along with the starting position of the device. The model initializes using the starting position information, and real-time localization inference is then launched.

Optionally, a further software module may be included as part of the system which receives as input the current predicted location of the at least portion of the personal care device and computes a real-time coverage estimate for the relevant anatomy or relevant region of the anatomy. For example, in the context of an oral care device, such a software module may be configured to update a current coverage estimate for the particular mouth segment currently being cleaned (e.g. brushing time spent).

In some embodiments, the personal care device may comprise one or more indicator elements such as indicator lights for communicating a real-time coverage of a current anatomy area, e.g. a brushing coverage of a currently brushed mouth segment. For instance the indicator lights might comprise color coded lights emitted by a light ring integrated at the surface of the housing of the personal care device.

In some embodiments, instead of asking the user to provide a preferred starting position, alternatively a dedicated software module could be utilized to predict/retrieve the most likely starting position by analyzing starting location estimates derived from previous sessions that were performed by the user.

In other words, and as a more general principle, in some embodiments, the step of obtaining data indicating a starting position may comprise accessing a datastore recording historical personal care data for the user and determining a predicted starting position based on processing of the historical personal care data.

In this case, by way of one example, the predicted starting position could be derived using a post-brushing localization model (a.k.a. offline model) which runs, for example, in a cloud environment and has access to the raw IMU data of previous sessions that is stored in the same cloud infrastructure. An offline prediction model may have in general a higher accuracy in comparison to a real-time prediction configuration since the post-brushing prediction model is not constrained by any causal dependencies but is able to consider both backward and forward time dependencies. The offline prediction model could be provided having substantially the same structure and operation as the model of Fig. 7, except for the fact that the LSTM layer is modified to make it bi-directional, such that it can perform both forward and backward reasoning. This allows the model to reason backward to determine a prediction of the starting position. Alternatively, the offline prediction model might be provided with a different architecture to that of Fig. 7. One example is a UNet-based localization model. The offline model may be configured to process IMU data for a plurality of personal care sessions, and derive a predicted 'most frequent' starting position. Such an approach may yield a more accurate prediction of most likely starting position, since it can process the whole of the IMU dataset of one or more personal care sessions in an offline manner, after the relevant sessions have ended.

In other words, in some embodiments, the historical personal care data may include IMU signal data for historical personal care sessions, and wherein the predicting the personal care session starting position comprises processing the historical IMU signal data to estimate historical starting positions, and predict the starting position based on the estimated historical starting positions.

As a simpler implementation, the historical cleaning personal care data for the user may include historical starting position data, and the predicting the starting position comprises processing of the historical starting position data.

In some embodiments, the method may confirm the predicted starting position with the user. In other words, in some embodiments, the method further comprises generating a control signal for controlling a user interface to generate a user-perceptible prompt requesting confirmation of the predicted starting position.

In some embodiments, once the most likely starting segment for a following brushing session has been retrieved from the user's historical session data, the software module could compare it to the currently set starting segment as recorded in the settings dataset. In case there is a difference, the software app might generate a message dialog at the user interface asking the user if it wants to update the current set starting position.

In other words, as a more general principle, in some embodiments, the method comprises additionally receiving a user setting for the starting position; comparing the user setting for the starting position with the predicted starting position; and responsive to detecting a disparity between the two, generating a control signal for controlling a user interface to generate a user-perceptible prompt requesting confirmation of the predicted starting position.

In accordance with at least one set of embodiments, the provision of a starting position might be made optional, meaning that the system might include two localization models dedicated to two specific tasks. A first model might be trained end-to-end specifically for localization when no starting position is supplied or is not known yet. A second model might be trained end-to-end specifically for localization when a planned starting position has been supplied by the user or a reliable user specific starting position has been inferred from user's historical session data. Depending on whether a preferred starting point has been provided or made available, the solution selects the appropriate model for localization inference.

In other words, in some embodiments, the method might further comprise a preliminary mode selection step comprising selecting a first or second mode. One of the modes is configured for localization using an input starting position and the other is configured for localization without an input starting position. For example, responsive to selection of a first mode, the steps of the method according to embodiments described earlier are applied. For example, this might be a model in accordance with Fig. 7. Responsive to selection of a second mode, a second localization model might be retrieved configured to perform real time localization without an input indicative of starting position, and providing the real time IMU signal data as input to the second localization model as input. For instance, this might be a model in accordance with Fig. 1.

Another option would be to provide a system in which the provision of the starting position is optional, but wherein the system comprises a single localization model capable of handling two situations: a first situation where no preferred starting position is provided by the user or is not known yet, and a second situation where the preferred starting position is provided or is estimated from the user's historical session data.

In other words, in some embodiments, a single localization model might be initializable in two states: a first state in which the model is configured for generating localization data based on using an input indicating a starting position and a second state in which the model is configured to generate localization data without using an input indicating starting position. The method may further comprise a preliminary mode selection step comprising selecting a first or second mode, and wherein responsive to selection of the first mode, the localization model is used in the first initialization state, and responsive to selection of the second mode, the localization model is used in the second initialization state.

In this approach, the model is initialized differently depending on whether a starting position is supplied or not. For example, in the case that the starting position is known, the model is initialized by selecting the specific embedding values associated to the provided starting position which determine the LSTM hidden and cell state and are obtained from training. Otherwise, when the starting position is not known, the model is initialized by assigning an all zeros hidden and cell state vectors of the LSTM. Note that such model that is capable of handling both cases can be trained end-to-end.

Embodiments of the invention described above employ a processing device. The processing device may in general comprise a single processor or a plurality of processors. It may be located in a single containing device, structure or unit, or it may be distributed between a plurality of different devices, structures or units. Reference therefore to the processing device being adapted or configured to perform a particular step or task may correspond to that step or task being performed by any one or more of a plurality of processing components, either alone or in combination. The skilled person will understand how such a distributed processing device can be implemented. The processing device may include a communication module or input/output for receiving data and outputting data to further components.

The one or more processors of the processing device can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A method (10) for real-time localization of at least a portion of a personal care device (54) during a personal care session, comprising:
obtaining (12) data indicating a starting position for the at least portion of the personal care device for the personal care session;
receiving (14) real-time inertial measurement unit (56), IMU, signal data during the personal care session;
retrieving (16) a real-time localization model (60) from a datastore (58), wherein the localization model comprises an artificial intelligence (AI) model, the localization model trained to receive a first input comprising data indicative of a starting position of said at least portion of the personal care device and a second input comprising real-time IMU signal data, and to generate as an output a real-time localization signal indicating a real-time predicted location of the device portion;
providing (18) the obtained device portion starting position as an input to the localization model;
providing (20) the received real time IMU signal data for the personal care session as input to the localization model over the course of the personal care session;
receiving (22) an output real time localization signal from the localization model; and
generating (24) a data output based on the real-time localization signal.

2. The method of claim 1, wherein the AI model is an artificial neural network, and preferably a recurrent neural network.

3. The method of claim 1 or 2, wherein the AI model is a long short-term memory (LSTM) artificial neural network.

4. The method of any of claims 1-3, wherein the personal care device is an oral care device, and the method is for real-time localization of a head portion of the oral care device within a user's mouth during a cleaning session.

5. The method of any of claims 1-4, wherein the obtaining data indicating a starting position comprises receiving from a user interface a user input indicative of a planned starting position, and optionally wherein the user interface is a user interface comprised by a mobile computing device.

6. The method of any of claims 1-4, wherein the obtaining data indicating a starting position comprises accessing a datastore recording historical personal care data for the user and determining a predicted starting position based on processing of the historical personal care data.

7. The method of claim 6,
wherein the historical personal care data for the user includes historical starting position data, and the predicting the starting position comprises processing of the historical starting position data, and/or
wherein the historical personal care data includes IMU signal data for historical personal care sessions, and wherein the predicting the personal care session starting position comprises processing the historical IMU signal data to estimate historical starting positions, and predict the starting position based on the estimated historical starting positions.

8. The method of claim 7, wherein the method comprises additionally:
receiving a user setting for the starting position;
comparing the user setting for the starting position with the predicted starting position; and
responsive to detecting a disparity between the two, generating a control signal for controlling a user interface to generate a user-perceptible prompt requesting confirmation of the predicted starting position.

9. The method of any of claims 1-8,
wherein the method further comprises a preliminary mode selection step comprising selecting a first or second mode;
wherein responsive to selection of the first mode, the steps of the method according to any of claims 1-8 are performed, and
responsive to selection of the second mode, a second localization module is retrieved configured to perform real time localization without an input indicative of starting position and providing the real time IMU signal data as input to the second localization model as input.

10. The method of any of claims 1-8,
wherein the localization model is initializable in two states: a first state in which the localization model is configured for generating localization data based on using an input indicating a starting position and a second state in which the localization model is configured to generate localization data without using an input indicating starting position;
wherein the method further comprises a preliminary mode selection step comprising selecting a first or second mode;
wherein responsive to selection of the first mode, the localization model is used in the first initialization state, and responsive to selection of the second mode, the localization model is used in the second initialization state.

11. The method of any of claims 1-10, wherein the starting position is encoded in the form of an integer number having a defined range of possible values, and optionally wherein the different values of the integer number correspond to different body segment locations, e.g. different mouth segment locations.

12. The method of any of claims 1-11, wherein the AI model comprises a long short-term memory (LSTM) artificial neural network, and wherein the method comprises initializing a cell state and hidden state of the LSTM artificial neural network in dependence upon the first input comprising the data indicative of a starting position of said portion of the personal care device.

13. A computer program product comprising computer program code configured, when run on a processor, to cause the processor to perform a method in accordance with any of claims 1-12.

14. A processing device (32) for use in real-time localization of at least a portion of a personal care device (54) during a personal care session, comprising:
an input/output (34); and
one or more processors (36) configured to perform a method, the method comprising:
obtaining data indicating a starting position for the at least portion of the personal care device for a personal care session;
receiving at the input/output real-time inertial measurement unit (IMU) signal data during the personal care session;
retrieving a real-time localization model (60) from a datastore (58), wherein the localization model comprises an artificial intelligence (AI) model, the localization model trained to receive a first input comprising data indicative of a starting position of said portion of the personal care device and a second input comprising real-time IMU signal data, and to generate as an output a real-time localization signal indicating a real-time predicted location of the device portion;
providing the obtained head portion starting position as an input to the localization model;
providing the received real time IMU signal data for the personal care session as input to the localization model over the course of the personal care session; and
receiving an output real time localization signal from the localization model; and
generating a data output based on the real-time localization signal and optionally coupling the data output to the input/output.

15. A system (30) comprising:
A personal care device (54) comprising an integrated IMU for generating IMU signal data during personal care sessions and comprising a wireless communication module for transmitting the IMU signal; and
a processing device (32) as claimed in claim 14, configured to receive the IMU signal data transmitted by the personal care device, and
optionally wherein the system comprises a mobile communications device comprising a user interface.

## Patentansprüche

1. Verfahren (10) zur Echtzeit-Lokalisierung mindestens eines Teils einer Körperpflegevorrichtung (54) während einer Körperpflegesitzung, umfassend:
Erhalten (12) von Daten, die eine Startposition für den mindestens einen Teil der Körperpflegevorrichtung für die Körperpflegesitzung angeben;
Empfangen (14) von Echtzeit-Signaldaten einer Inertialmesseinheit (56), IMU, während der Körperpflegesitzung;
Abrufen (16) eines Echtzeit-Lokalisierungsmodells (60) aus einem Datenspeicher (58), wobei das Lokalisierungsmodell ein Modell der künstlichen Intelligenz (AI) umfasst, wobei das Lokalisierungsmodell darauf trainiert ist, eine erste Eingabe, die Daten umfasst, die eine Startposition des mindestens einen Teils der Körperpflegevorrichtung angeben, und eine zweite Eingabe, die Echtzeit-IMU-Signaldaten umfasst, zu empfangen und als eine Ausgabe ein Echtzeit-Lokalisierungssignal zu generieren, das eine in Echtzeit vorhergesagte Stelle des Vorrichtungsteils angibt;
Bereitstellen (18) der erhaltenen Startposition des Vorrichtungsteils als Eingabe für das Lokalisierungsmodell;
Bereitstellen (20) der empfangenen Echtzeit-IMU-Signaldaten für die Körperpflegesitzung als Eingabe für das Lokalisierungsmodell im Verlauf der Körperpflegesitzung;
Empfangen (22) eines ausgegebenen Echtzeit-Lokalisierungssignals vom Lokalisierungsmodell; und
Generieren (24) einer Datenausgabe basierend auf dem Echtzeit-Lokalisierungssignal.

2. Verfahren nach Anspruch 1, wobei es sich bei dem Al-Modell um ein künstliches neuronales Netzwerk und vorzugsweise um ein rekurrentes neuronales Netzwerk handelt.

3. Verfahren nach Anspruch 1 oder 2, wobei es sich bei dem Al-Modell um ein künstliches neuronales Netzwerk vom Typ Long Short-Term Memory (LSTM) handelt.

4. Verfahren nach einem der Ansprüche 1-3, wobei es sich bei der Körperpflegevorrichtung um eine Mundpflegevorrichtung handelt und das Verfahren der Echtzeit-Lokalisierung eines Kopfteils der Mundpflegevorrichtung im Mund des Benutzers während einer Reinigungssitzung dient.

5. Verfahren nach einem der Ansprüche 1-4, wobei das Erhalten von Daten, die eine Startposition angeben, Empfangen einer Benutzereingabe, die eine geplante Startposition angibt, von einer Benutzeroberfläche umfasst und optional wobei es sich bei der Benutzeroberfläche um eine Benutzeroberfläche handelt, die von einer mobilen Rechenvorrichtung umfasst ist.

6. Verfahren nach einem der Ansprüche 1-4, wobei das Erhalten von Daten, die eine Ausgangsposition angeben, Zugreifen auf einen Datenspeicher, der historische Körperpflegedaten für den Benutzer aufzeichnet, und Bestimmen einer vorhergesagten Startposition basierend auf der Verarbeitung der historischen Körperpflegedaten umfasst.

7. Verfahren nach Anspruch 6,
wobei die historischen Körperpflegedaten des Benutzers historische Startpositionsdaten beinhalten und das Vorhersagen der Startposition Verarbeiten der historischen Startpositionsdaten umfasst und/oder
wobei die historischen Körperpflegedaten IMU-Signaldaten für historische Körperpflegesitzungen beinhalten und wobei das Vorhersagen der Startposition der Körperpflegesitzung Verarbeiten der historischen IMU-Signaldaten zum Schätzen historischer Startpositionen und Vorhersagen der Startposition basierend auf den geschätzten historischen Startpositionen umfasst.

8. Verfahren nach Anspruch 7, wobei das Verfahren zusätzlich Folgendes umfasst:
Empfangen einer Benutzereinstellung für die Startposition;
Vergleichen der Benutzereinstellung für die Startposition mit der vorhergesagten Startposition; und
Generieren eines Steuersignals zum Steuern einer Benutzeroberfläche, um eine für den Benutzer wahrnehmbare Aufforderung zu generieren, die Bestätigung der vorhergesagten Startposition verlangt, sobald eine Diskrepanz zwischen den beiden detektiert wird.

9. Verfahren nach einem der Ansprüche 1-8,
wobei das Verfahren weiter einen vorbereitenden Modusauswahlschritt umfasst, der Auswählen eines ersten oder zweiten Modus umfasst;
wobei bei Auswahl des ersten Modus die Schritte des Verfahrens nach einem der Ansprüche 1 bis 8 durchgeführt werden, und
bei Auswahl des zweiten Modus ein zweites Lokalisierungsmodul abgerufen wird, das so konfiguriert ist, dass es eine Echtzeit-Lokalisierung ohne Eingabe, die eine Startposition angibt, durchführt und die Echtzeit-IMU-Signaldaten, wie in das zweite Lokalisierungsmodell eingegeben, als Eingabe bereitstellt.

10. Verfahren nach einem der Ansprüche 1-8,
wobei das Lokalisierungsmodell in zwei Zuständen initialisiert werden kann: einem ersten Zustand, in dem das Lokalisierungsmodell so konfiguriert ist, dass es Lokalisierungsdaten basierend auf einer Eingabe generiert, die eine Startposition angibt, und einem zweiten Zustand, in dem das Lokalisierungsmodell so konfiguriert ist, dass es Lokalisierungsdaten generiert, ohne eine Eingabe zu verwenden, die eine Startposition angibt;
wobei das Verfahren weiter einen vorbereitenden Modusauswahlschritt umfasst, der Auswählen eines ersten oder zweiten Modus umfasst;
wobei bei Auswahl des ersten Modus das Lokalisierungsmodell im ersten Initialisierungszustand verwendet wird und bei Auswahl des zweiten Modus das Lokalisierungsmodell im zweiten Initialisierungszustand verwendet wird.

11. Verfahren nach einem der Ansprüche 1-10, wobei die Startposition in Form einer ganzen Zahl, die einen definierten Bereich möglicher Werte aufweist, kodiert ist und optional wobei die verschiedenen Werte der ganzen Zahl verschiedenen Körpersegmentstellen, z. B. verschiedenen Mundsegmentstellen, entsprechen.

12. Verfahren nach einem der Ansprüche 1-11, wobei das Al-Modell ein künstliches neuronales Netzwerk vom Typ Long Short-Term Memory (LSTM) umfasst und wobei das Verfahren Initialisieren eines Zellzustands und eines verborgenen Zustands des künstlichen neuronalen Netzwerks vom Typ LSTM in Abhängigkeit von der ersten Eingabe umfasst, welche die Daten umfasst, die eine Ausgangsposition des Teils der Körperpflegevorrichtung angeben.

13. Computerprogrammprodukt, umfassend Computerprogrammcode, der so konfiguriert ist, dass er, wenn er auf einem Prozessor läuft, den Prozessor veranlasst, ein Verfahren nach einem der Ansprüche 1-12 durchzuführen.

14. Verarbeitungsvorrichtung (32) zur Echtzeit-Lokalisierung mindestens eines Teils einer Körperpflegevorrichtung (54) während einer Körperpflegesitzung, umfassend:
einen Eingang/Ausgang (34); und
einen oder mehrere Prozessoren (36), die zum Durchführen eines Verfahrens konfiguriert sind, wobei das Verfahren Folgendes umfasst:
Erhalten von Daten, die eine Startposition für den mindestens einen Teil der Körperpflegevorrichtung für eine Körperpflegesitzung angeben;
Empfangen am Eingang/Ausgang von Echtzeit-Inertialmesseinheit- (IMU-) Signaldaten während der Körperpflegesitzung;
Abrufen eines Echtzeit-Lokalisierungsmodells (60) aus einem Datenspeicher (58), wobei das Lokalisierungsmodell ein Modell der künstlichen Intelligenz (AI) umfasst, wobei das Lokalisierungsmodell darauf trainiert ist, eine erste Eingabe, die Daten umfasst, die eine Startposition des Teils der Körperpflegevorrichtung angeben, und eine zweite Eingabe, die Echtzeit-IMU-Signaldaten umfasst, zu empfangen und als eine Ausgabe ein Echtzeit-Lokalisierungssignal zu generieren, das eine in Echtzeit vorhergesagte Stelle des Vorrichtungsteils angibt;
Bereitstellen der erhaltenen Startposition des Kopfteils als Eingabe für das Lokalisierungsmodell;
Bereitstellen der empfangenen Echtzeit-IMU-Signaldaten für die Körperpflegesitzung als Eingabe für das Lokalisierungsmodell im Verlauf der Körperpflegesitzung; und
Empfangen eines ausgegebenen Echtzeit-Lokalisierungssignals vom Lokalisierungsmodell; und
Generieren einer Datenausgabe basierend auf dem Echtzeit-Lokalisierungssignal und optionales Koppeln der Datenausgabe an den Eingang/Ausgang.

15. System (30) umfassend:
eine Körperpflegevorrichtung (54), die eine integrierte IMU zum Generieren von IMU-Signaldaten während Körperpflegesitzungen umfasst und ein drahtloses Kommunikationsmodul zum Übertragen des IMU-Signals umfasst; und
eine Verarbeitungsvorrichtung (32) nach Anspruch 14, die so konfiguriert ist, dass sie die von der Körperpflegevorrichtung übertragenen IMU-Signaldaten empfängt, und
wobei das System optional eine mobile Kommunikationsvorrichtung umfasst, die eine Benutzeroberfläche umfasst.

## Revendications

1. Procédé (10) de localisation en temps réel d'au moins une partie d'un dispositif de soins personnels (54) au cours d'une séance de soins personnels, comprenant :
l'obtention (12) de données indiquant une position de début pour la ou les parties du dispositif de soins personnels pour la séance de soins personnels ;
la réception (14) de données de signal d'unité de mesure inertielle, IMU, (56) en temps réel pendant la séance de soins personnels ;
la récupération (16) d'un modèle de localisation en temps réel (60) à partir d'un magasin de données (58), dans lequel le modèle de localisation comprend un modèle d'intelligence artificielle (IA), le modèle de localisation étant entraîné à recevoir une première entrée comprenant des données indicatives d'une position de début de ladite ou desdites parties du dispositif de soins personnels et une seconde entrée comprenant des données de signal IMU en temps réel, et à générer en sortie un signal de localisation en temps réel indiquant un emplacement prédit en temps réel de la partie de dispositif ;
la fourniture (18) de la position de début de partie de dispositif obtenue comme entrée du modèle de localisation ;
la fourniture (20) des données de signal IMU en temps réel reçues pour la séance de soins personnels comme entrée du modèle de localisation au cours de la séance de soins personnels ;
la réception (22) d'un signal de localisation en temps réel de sortie depuis le modèle de localisation ; et
la génération (24) d'une sortie de données sur la base du signal de localisation en temps réel.

2. Procédé selon la revendication 1, dans lequel le modèle d'lA est un réseau neuronal artificiel, et de préférence un réseau neuronal récurrent.

3. Procédé selon la revendication 1 ou 2, dans lequel le modèle d'lA est un réseau neuronal artificiel à mémoire à long court terme (LSTM).

4. Procédé selon l'une quelconque des revendications 1-3, dans lequel le dispositif de soins personnels est un dispositif de soins buccaux, et le procédé est destiné à la localisation en temps réel d'une partie de tête du dispositif de soins buccaux dans la bouche d'un utilisateur au cours d'une séance de nettoyage.

5. Procédé selon l'une quelconque des revendications 1-4, dans lequel l'obtention de données indiquant une position de début comprend la réception, depuis une interface utilisateur, d'une entrée utilisateur indiquant une position de début prédite et, éventuellement, dans lequel l'interface utilisateur est une interface utilisateur constituée d'un dispositif informatique mobile.

6. Procédé selon l'une quelconque des revendications 1-4, dans lequel l'obtention de données indiquant une position de début comprend l'accès à un magasin de données enregistrant des données historiques de soins personnels pour l'utilisateur et la détermination d'une position de début prédite sur la base du traitement des données historiques de soins personnels.

7. Procédé de la revendication 6,
dans lequel les données historiques de soins personnels de l'utilisateur incluent des données historiques de position de début, et la prédiction de la position de début comprend le traitement des données historiques de position de début, et/ou
dans lequel les données historiques de soins personnels incluent des données de signal IMU pour des séances de soins personnels historiques, et dans lequel la prédiction de la position de début de séance de soins personnels comprend le traitement des données historiques de signal IMU pour estimer des positions de début historiques et prédire la position de début sur la base des positions de début historiques estimées.

8. Procédé selon la revendication 7, dans lequel le procédé comprend en outre :
la réception d'un paramètre utilisateur pour la position de début ;
la comparaison du paramètre utilisateur pour la position de début à la position de début prédite ; et
en réponse à la détection d'une disparité entre les deux, la génération d'un signal de commande pour commander une interface utilisateur afin de générer une invite perceptible par l'utilisateur demandant confirmation de la position de début prédite.

9. Procédé selon l'une quelconque des revendications 1-8,
dans lequel le procédé comprend en outre une étape préliminaire de sélection de mode comprenant la sélection d'un premier ou d'un second mode ;
dans lequel, en réponse à la sélection du premier mode, les étapes du procédé selon l'une quelconque des revendications 1-8 sont réalisées, et
en réponse à la sélection du seconde mode, un second module de localisation est récupéré, configuré pour réaliser une localisation en temps réel sans entrée indiquant une position de début et la fourniture des données de signal IMU en temps réel comme entrée au second modèle de localisation.

10. Procédé selon l'une quelconque des revendications 1-8,
dans lequel le modèle de localisation peut être initialisé dans deux états : un premier état dans lequel le modèle de localisation est configuré pour générer des données de localisation sur la base de l'utilisation d'une entrée indiquant une position de début et un second état dans lequel le modèle de localisation est configuré pour générer des données de localisation sans utiliser d'entrée indiquant une position de début ;
dans lequel le procédé comprend en outre une étape préliminaire de sélection de mode comprenant la sélection d'un premier ou d'un second mode ;
dans lequel, en réponse à la sélection du premier mode, le modèle de localisation est utilisé dans le premier état d'initialisation et, en réponse à la sélection du seconde mode, le modèle de localisation est utilisé dans le second état d'initialisation.

11. Procédé selon l'une quelconque des revendications 1-10, dans lequel la position de début est codée sous la forme d'un nombre entier présentant une plage définie de valeurs possibles et, éventuellement, dans lequel les différentes valeurs du nombre entier correspondent à différents emplacements de segments corporels, par exemple différents emplacements de segments de la bouche.

12. Procédé selon l'une quelconque des revendications 1-11, dans lequel le modèle d'lA comprend un réseau neuronal artificiel à mémoire à long court terme (LSTM), et dans lequel le procédé comprend l'initialisation d'un état de cellule et d'un état caché du réseau neuronal artificiel LSTM en fonction de la première entrée comprenant les données indicatives d'une position de début de ladite partie du dispositif de soins personnels.

13. Produit de programme informatique comprenant un code de programme informatique configuré, lorsqu'il est exécuté sur un processeur, pour amener le processeur à réaliser un procédé selon l'une quelconque des revendications 1-12.

14. Dispositif de traitement (32) destiné à être utilisé dans la localisation en temps réel d'au moins une partie d'un dispositif de soins personnels (54) au cours d'une séance de soins personnels, comprenant :
une entrée/sortie (34) ; et
un ou plusieurs processeurs (36) configurés pour réaliser un procédé, le procédé comprenant :
l'obtention de données indiquant une position de début pour la ou les parties du dispositif de soins personnels pour une séance de soins personnels ;
la réception, au niveau de l'entrée/sortie, de données de signal d'unité de mesure inertielle (IMU) en temps réel pendant la séance de soins personnels ;
la récupération d'un modèle de localisation en temps réel (60) à partir d'un magasin de données (58), dans lequel le modèle de localisation comprend un modèle d'intelligence artificielle (IA), le modèle de localisation étant entraîné à recevoir une première entrée comprenant des données indicatives d'une position de début de ladite partie du dispositif de soins personnels et une seconde entrée comprenant des données de signal IMU en temps réel, et à générer en sortie un signal de localisation en temps réel indiquant un emplacement prédit en temps réel de la partie de dispositif ;
la fourniture de la position de début de partie de tête obtenue comme entrée du modèle de localisation ;
la fourniture des données de signal IMU en temps réel reçues pour la séance de soins personnels comme entrée du modèle de localisation tout au long de la séance de soins personnels ; et
la réception d'un signal de localisation en temps réel de sortie provenant du modèle de localisation ; et
la génération d'une sortie de données sur la base du signal de localisation en temps réel et, éventuellement, le couplage de la sortie de données à l'entrée/sortie.

15. Système (30) comprenant :
un dispositif de soins personnels (54) comprenant une IMU intégrée pour générer des données de signal IMU pendant des séances de soins personnels et comprenant un module de communication sans fil pour transmettre le signal IMU ; et
un dispositif de traitement (32) selon la revendication 14, configuré pour recevoir les données de signal IMU transmises par le dispositif de soins personnels, et
éventuellement dans lequel le système comprend un dispositif de communication mobile doté d'une interface utilisateur.
